# EUROPEAN PATENT APPLICATION

(11) **EP 2 402 517 A1**
(43) Date of publication of application: **04.01.2012**
(21) Application number: 10006856.8
(22) Date of filing: 02.07.2010
(51) Int. Cl.: E03D 5/01, E03D 11/11, A47K 11/02, G01F 23/16

(54) **Level indicator for a portable toilet**

(71) Applicant: Thetford Corporation, Ann Arbor, Michigan 48103 (US)
(72) Inventor: Kuijten, Pascal, 4812 LT Breda (NL)
(74) Representative: Gleiss, Alf-Olav

(57) **Abstract**

A level indicator for a holding tank of a portable toilet includes a level gage. The holding tank may be a waste holding tank or a flush water holding tank. The level gage includes an upper open end, a lower open end, and a passage providing fluid communication between the upper open end and the lower open end. A first membrane covers the upper open end. The first membrane has an outer side exposed to atmospheric pressure. A second membrane covers the lower open end. The second membrane has an outer side exposed to a variable fluid pressure created by contents of the holding tank. A pressure responsive fluid is disposed in the passage. A level of the pressure responsive fluid is visable from an exterior side of the level gage and indicative of a level of contents in the holding tank.

## Description

### FIELD

The present teachings generally related to portable toilets. More particularly, the present teachings relate to a level indicator for a portable toilet operative to provide a visual indication of a fluid level within a fluid holding tank of the portable toilet.

### BACKGROUND

The statements in this section merely provide background information related to the present disclosure and may not constitute prior art.

A number of commonly assigned patents illustrate and describe portable toilets of the type including a seat section mounted on a waste holding tank section. The seat section generally includes a toilet bowl and a flush water storage reservoir or holding tank. In use, flush water is introduced into the toilet bowl through a conventional mechanism such as a hand-operated pump. After use, a valve disposed between the bowl and the waste holding tank section is operated to allow the contents of the bowl to be deposited into the holding tank section. In this way the waste materials are accumulated in the waste holding tank section until the opportunity presents itself for dumping the contents of the waste holding tank section at an appropriate sanitary disposal station. In the type of portable toilet just described the waste holding tank section is separably mounted to the seat section so that only the waste holding tank section need be removed and dumped. Other designs of portable toilets may not be of this particular construction and may require the entire portable toilet to be brought to a disposal station for dumping or otherwise periodically emptied.

It is generally known in the relevant art to provide a level indicator for providing a visual indication of a fluid level within a holding tank of the portable toilet such as a waste holding tank. Otherwise, it may be either difficult or inconvenient to determine the remaining capacity of the waste holding tank. Of course, in the aforementioned type of portable toilets it is possible for one to open the valve and look into the holding tank. Needless to say, this may be a rather unpleasant task due to exposure of the contents of the waste holding tank when the valve is open. Furthermore because the observer is looking down onto the surface of the contents of the waste holding tank it may be difficult to judge the level of the content. This is especially the case in confined and/or low light quarters where such toilets are often located. Attempts to judge the contents of the waste holding tank by weight are also difficult.

One known level indicator for providing a visual indication of a fluid level within a waste holding tank of a portable toilet is shown and described in common assigned U.S. Patent No. 4,547,916 which is hereby incorporated by reference as if fully set forth herein. In this reference, the level indicator includes a visible indicator on the exterior of the toilet's waste holding tank, a float mechanism on the tank's interior operable to sense the level of liquid material in the tank, and a magnetic coupling between the float mechanism and the indicator for causing the indicator to be operated to a position corresponding to the level of liquid material sensed by the float mechanism.

While known arrangements for providing a visual indication of a fluid level within a holding tank of a portable toilet may have proven to be acceptable for their intended purposes, a continuous need for improvement exists within the pertinent art.

### SUMMARY

According to one particular aspect, the present teachings provide a level indicator for a holding tank of a portable toilet that includes a level gage. The holding tank may be a waste holding tank or a flush water holding tank. The level gage includes an upper open end, a lower open end, and a passage providing fluid communication between the upper open end and the lower open end. A first membrane covers the upper open end. The first membrane has an outer side exposed to atmospheric pressure. A second membrane covers the lower open end. The second membrane has an outer side exposed to a variable fluid pressure created by contents of the holding tank. A pressure responsive fluid is disposed in the passage. A level of the pressure responsive fluid is visable from an exterior side of the level gage and indicative of a level of contents in the holding tank.

According to another particular aspect, the present teachings provide a level indicator for a holding tank of a portable toilet, such as a waste holding tank or a flush water holding tank. The level indicator includes a level gage including a front panel and a rear panel. The front and rear panels are disposed generally parallel to one another and define a passage therebetween. The level gage further includes an upper open end and a lower open end. The passage provides fluid communication between the upper open end and the lower open end. A first membrane covers the upper open end and has an outer side exposed to atmospheric pressure. The second membrane covers the lower open end and has an outer side exposed to a variable fluid pressure created by contents of the holding tank. A pressure responsive fluid is disposed in the passage. A level of the pressure responsive fluid is visable from an exterior side of the level gage and is indicative of a level of contents in the holding tank.

According to yet another particular aspect, the present teachings provide a portable toilet. The portable toilet includes a holding tank, a waste holding tank, a flush water holding tank, and at least one level indicator. The waste holding tank receives waste and toilet fluids. The flush water holding tank receives flush water and toilet fluid. The at least one level indicator indicates a fluid level within the waste holding tank and/or the flush water holding tank. The level indicator includes a level gage having an upper open end, a lower open end, and a passage providing fluid communication between the upper open end and the lower open end. A first membrane covers the upper open end and has an outer side exposed to atmospheric pressure. A second membrane covering the lower open end and has an outer side exposed to a variable fluid pressure created by contents of the associated holding tank. A pressure responsive fluid is disposed in the passage. A level of the pressure responsive fluid is visable from an exterior side of the level gage and indicative of a level of contents in the holding tank.

### DRAWINGS

The present teachings will become more fully understood from the detailed description, the appended claims and the following drawings. The details within the various views of the drawings will be understood to be drawn generally to scale.

Figure 1 is a perspective view of a portable toilet including a level indicator for providing a visual indication of a fluid level within a holding tank of the portable toilet in accordance with the present teachings.

Figure 2 is a front view of the portable toilet of Figure 1.

Figure 3 is another perspective view of the portable toilet of Figure 1, a lid of the portable toilet shown articulated to an open position.

Figure 4 is a side view of a waste holding tank of the portable toilet of Figure 1.

Figure 5 is a cross-sectional view taken along the line 5-5 of Figure 4.

Figure 6 is an enlarged view of the detail of circle 6 of Figure 5.

### DETAILED DESCRIPTION

The following description is merely exemplary in nature and is not intended to limit the present disclosure, application, or uses. It should be understood that throughout the drawings, corresponding reference numerals indicate like or corresponding parts and features. The description and any specific examples, while indicating embodiments of the present disclosure, are intended for purposes of illustration only and are not intended to limit the scope of the present disclosure.

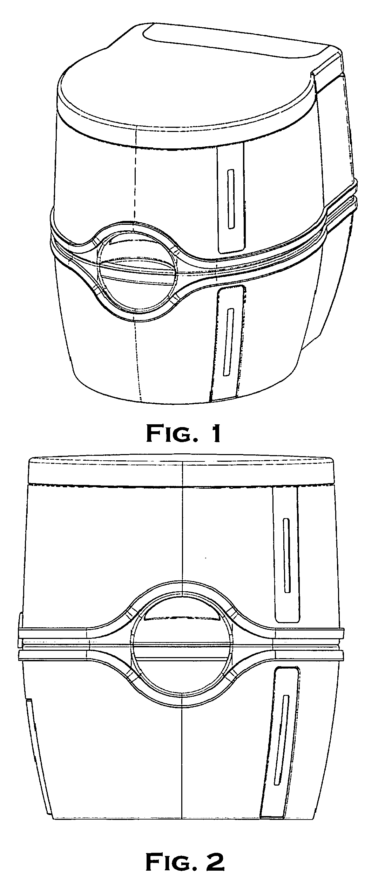

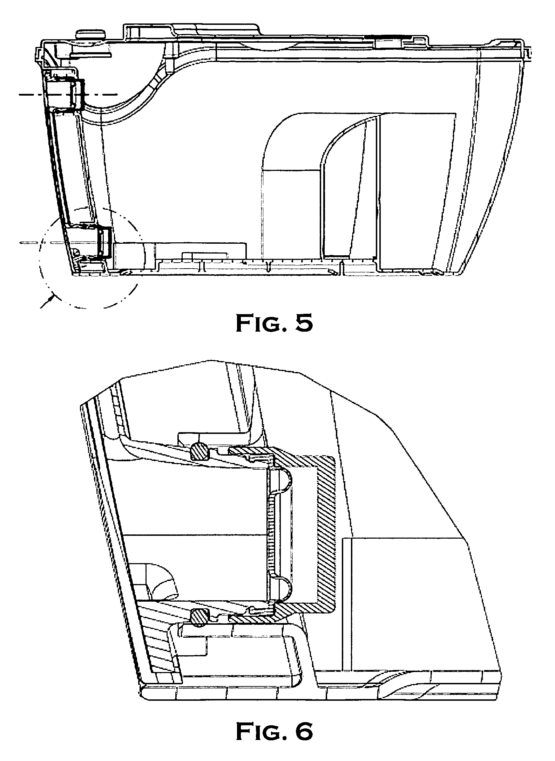

Referring generally to Figures 1 through 6 of the drawings, a portable toilet 10 including a level indicator 12 for providing a visual indication of a fluid level within a holding tank 14 of the portable toilet 10 in accordance with the present teachings is illustrated. The particular portable toilet 10 illustrated in the drawings will be understood to be merely exemplary. In this regard, it will become apparent to those skilled in the art that the present teachings have application to a variety of models of portable toilets.

The illustrated portable toilet 10 is shown to generally include a seat section 16 and a waste holding tank section 18. The waste holding tank section 18 defines the waste holding tank 14. The seat section 16 and the waste holding tank section 18 may be releasably coupled to one another in any manner well known in the art. It will be understood that the particular manner of releasably coupling the seat section 16 and the waste holding tank section 18 is beyond the scope of the present teachings. It will be further understood, that the seat section 16 and the waste holding tank section 18 may be permanently coupled to one another within the scope of the present teachings.

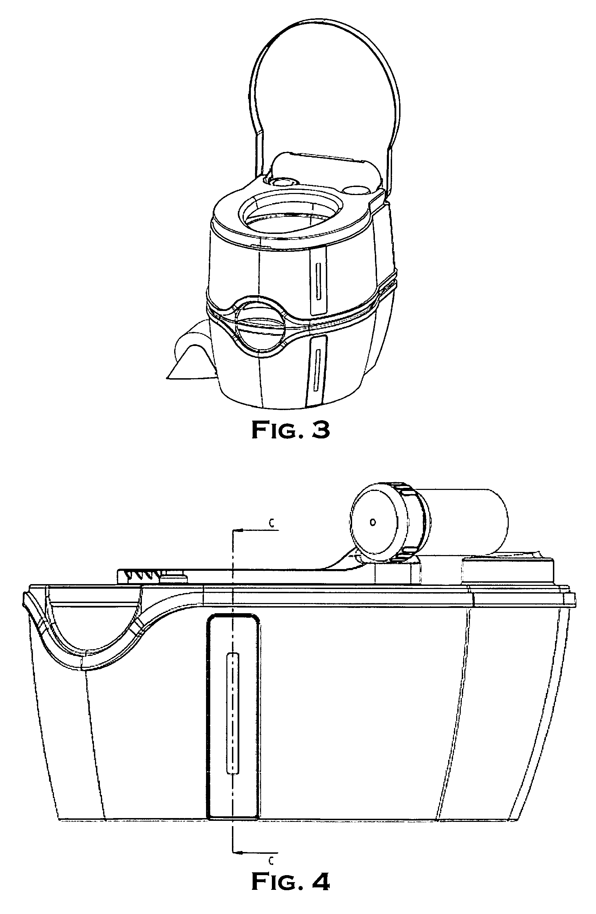

The seat section 16 may define a bowl 20, an overlying seat 22 and cover or lid 24. A flush water holding tank or chamber (not particularly illustrated) may be located within the interior of the seat section 16. The flush water holding tank may be filled in a conventional manner with fresh water through a fill port. Alternatively, the seat section 16 may be coupled to a source of water in a conventional manner. A pumping mechanism 26 (see Figure 3) may provide for pumping the fresh water from the flush water holding tank into the bowl 20 for use. After use, a valve (not particularly illustrated) carried by the waste holding tank section 18 may be operated by an operating handle so that the contents of bowl 20 are discharged into holding tank 14. In this way, the waste holding tank 14 accumulates waste contents for later disposal (e.g., at a suitable sanitary disposal station). Due to the separable mounting of the seat section 16 and the waste holding tank section 18, the waste holding tank section 18 may be removed for emptying.

With particular reference to Figures 4 through 6, the level indicator 12 of the present teachings will be further described. The level indicator 12 may be carried by the waste holding tank section 18 of the toilet 10 and may be operative to provide a visual indication of the level of waste and fluids within the waste holding tank 14. The level indicator 12 may be secured to the waste holding tank section 18 with fasteners or in another other way well known in the art.

As is illustrated in the particular embodiment shown throughout the drawings, a level indicator 12 in accordance with the present teachings may also be operatively associated with the flush water holding tank. It will be understood that the level indicator 12 associated with the flush water holding tank may be substantially identical to the level indicator 12 associated with the waste holding tank 14. The remainder of this detailed description will be directed to the level indicator 12 of the waste holding tank 14. The construction and function of the level indicator 12 associated with the flush water holding tank 14 will be apparent therefrom.

The level indicator 12 is to generally include a level gage 32. The level gage 32 may include a generally rectangular forward portion 34 and a pair of rearwardly extending cylindrical portions 36. It will be understood that the pair of rearwardly extending cylindrical portions 36 are substantially identical to one other. The cylindrical portions 36 define an upper open end of the level gage 32 and a lower open end of the level gage 32. It will be further understood that the upper and lower ends of the level gage 32 need not be cylindrical in shape. The geometry of these elements may be varied to any suitable shape within the scope of the present teachings. The level gage 32 may be unitarily constructed of a transparent plastic material or other suitable material.

The first and second cylindrical portions 36 are in fluid communication with each other through a passage 38 provided in the forward portion 34. Explaining further, the forward portion 34 may be constructed of first and second panels. The first and second panels may include a front panel 40 and a rear panel 42. The front and rear panels 40 and 42 may be generally parallel to one another and separated from one another by a gap that defines the passage 38.

The housing of the waste holding tank section 18 may be adapted to receive the level gage 32. In this regard, the housing may be provided with cylindrical apertures 44 for receiving the cylindrical portions 36. As illustrated, the housing may also define a recessed portion configured to receive the forward portion 34 of the level gage 32 such that the level gage sits flush with the exterior of the housing. O-rings 47 may be incorporated between the cylindrical portions 36 and the portions of the housing defining the cylindrical apertures 44 to provide a fluid tight arrangement.

The level indicator 12 is further illustrated to generally include a membrane 48 associated with both of the open ends of the cylindrical portions 36 of the level gage 32. The membranes 48 may be constructed of silicone rubber or other suitable material. The membranes 48 seal off the open ends of the cylindrical portions 36 and provide a physical and chemical barrier between the holding tank 14 and the level gage 32. A first membrane 48 covers the open end of the upper cylindrical portion 36 and has an outer side exposed to atmospheric pressure. A second membrane 48 covers the open end of the lower cylindrical portion 36 and has an outer side exposed to a variable fluid pressure created by the contents of the waste holding tank 14.

As illustrated, the membranes 48 may be integrally formed to both include a mounting portion 49 and a deflectable diaphragm portion 52. The mounting portion 49 may be in the form of a cylindrical flange 49. The cylindrical flange 49 may circumferentially surround the respective cylindrical portion 36. The diaphragm portion 52 may function in the manner discussed further below for transmitting pressure from the waste holding tank 14 to the level gage 32.

The membranes 48 may be secured to the cylindrical portions 36 by caps 46. The caps 46 may be constructed of plastic or any other suitable material. A first end of the caps 46 may define a cylindrical flange 54 which circumferentially surrounds one of the membranes 48 and the associated cylindrical portion 36. A second end 50 is open and provides for fluid communication between the waste holding tank 14 and the membranes 48.

A pressure responsive fluid may be provided within the interior of the level gage 32. Explaining further, the pressure responsive fluid may be sealed within the interior of the level gage 32 by the membranes 48 and thereby physically and chemically separated from the contents of the waste holding tank 14. The pressure sensitive fluid may be glycol or other suitable fluid. The fluid may be colored to provide a desired visual representation from the exterior of the level gage 32.

The membrane 48 associated with the lower one of the cylindrical portions 36 is thereby exposed to the contents of the waste holding tank 14. The membrane 48 associated with the upper one of the cylindrical portions 36 is shielded from the contents of the waste holding tank 14. Rather, the membrane 48 associated with the upper one of the cylindrical portions 36 remains exposed to atmospheric pressure regardless of the level within the holding tank 14.

In operation, the waste holding tank 14 of the waste holding tank section 18 collects human waste and toilet fluids. Pressure created by the contents of the waste holding tank 14 is transferred to the pressure responsive fluid of the level gage 32 through the membranes 48. The material and construction of the membranes 48 provides such transfer of pressure with a small amount of loss. In response to the pressure from the waste holding tank 14, the pressure responsive fluid of the level gage 32 will rise within the passage 38. The amount of pressure responsive fluid and the dimensions of the passage 38 may be configured such that the height of the pressure responsive fluid indicates the filled capacity of the holding tank 14. In this regard, the pressure responsive fluid may be calibrated such that the height of the pressure responsive fluid generally corresponds with the level of the contents in the waste holding tank 14. Alternatively, the level gage may be provided with graduations indicating that the waste holding tank 14 is full (or near full) based on a pressure exerted by the contents of the waste holding tank 14.

While specific examples have been described in the specification and illustrated in the drawings, it will be understood by those skilled in the art that various changes may be made and equivalence may be substituted for elements thereof without departing from the scope of the present teachings as defined in the claims. Furthermore, many modifications may be made to adapt a particular situation or material to the present teachings without departing from the essential scope thereof. Therefore, it may be intended that the present teachings not be limited to the particular examples illustrated by the drawings and described in the specification as the best mode of presently contemplated for carrying out the present teachings.

## Claims

1. A level indicator for a holding tank of a portable toilet, the level indicator comprising:
a level gage including an upper open end, a lower open end, and a passage providing fluid communication between the upper open end and the lower open end;
a first membrane covering the upper open end, the first membrane having an outer side exposed to atmospheric pressure;
a second membrane covering the lower open end, the second membrane having an outer side exposed to a variable fluid pressure created by contents of the holding tank; and
a pressure responsive fluid disposed in the passage, a level of the pressure responsive fluid visable from an exterior side of the level gage and indicative of a level of contents in the holding tank.

2. The level indicator for a holding tank of a portable toilet, wherein the level gage includes first and second panels disposed generally parallel to one another and defining the passage therebetween.

3. The level indicator for a holding tank of a portable toilet of claim 1, in combination with the holding tank.

4. The level indicator for a holding tank of a portable toilet of claim 1, wherein the holding tank is a waste holding tank.

5. The level indicator for a holding tank of a portable toilet of claim 1, wherein the holding tank is a flush water holding tank.

6. The level indicator for a holding tank of a portable toilet of claim 3, in combination with the portable toilet.

7. A level indicator for a holding tank of a portable toilet, the level indicator comprising:
a level gage including a front panel and a rear panel, the front and rear panels being disposed generally parallel to one another and defining a passage therebetween, the level gage further including an upper open end and a lower open end, the passage providing fluid communication between the upper open end and the lower open end;
a first membrane covering the upper open end, the first membrane having an outer side exposed to atmospheric pressure;
a second membrane covering the lower open end, the second membrane having an outer side exposed to a variable fluid pressure created by contents of the holding tank; and
a pressure responsive fluid disposed in the passage, a level of the pressure responsive fluid visable from an exterior side of the level gage and indicative of a level of contents in the holding tank.

8. The level indicator for a holding tank of a portable toilet of claim 7, in combination with the holding tank.

9. The level indicator for a holding tank of a portable toilet of claim 8, in combination with the portable toilet.

10. The level indicator for a holding tank of a portable toilet of claim 7, wherein the holding tank is a waste holding tank.

11. The level indicator for a holding tank of a portable toilet of claim 7, wherein the holding tank is a flush water holding tank.

12. A portable toilet comprising:
a first holding tank; and
a first level indicator for indicating a fluid level within the first holding tank, the level indicator comprising:
a level gage including an upper open end, a lower open end, and a passage providing fluid communication between the upper open end and the lower open end;
a first membrane covering the upper open end, the first membrane having an outer side exposed to atmospheric pressure;
a second membrane covering the lower open end, the second membrane having an outer side exposed to a variable fluid pressure created by contents of the first holding tank; and
a pressure responsive fluid disposed in the passage, a level of the pressure responsive fluid visable from an exterior side of the level gage and indicative of a level of contents in the first holding tank.

13. The portable toilet of claim 12, wherein the first holding tank is a waste holding tank.

14. The portable toilet of claim 13, further comprising:
a seat section and a waste holding tank section, the waste holding tank section defining the waste holding tank.

15. The portable toilet of claim 14, wherein the seat section and the waste holding tank section are releasably coupled to one another.

16. The portable toilet of claim 12, further comprising a flush water holding tank and a second level indicator for indicating a fluid level within the flush water holding tank.
